Europäisches Patentamt

European Patent Office

Office européen des brevets

(11) Veröffentlichungsnummer : **0 416 243 B1**

(12) **EUROPÄISCHE PATENTSCHRIFT**

(45) Veröffentlichungstag der Patentschrift :
05.01.94 Patentblatt 94/01

(21) Anmeldenummer : 90113197.9

(22) Anmeldetag : 11.07.90

(51) Int. Cl.$^5$ : **H01M 10/40**

(54) **Ionenleiter oder Elektrolyt für galvanische Elemente.**

(30) Priorität : **04.09.89 DE 3929316**

(43) Veröffentlichungstag der Anmeldung :
**13.03.91 Patentblatt 91/11**

(45) Bekanntmachung des Hinweises auf die
Patenterteilung :
**05.01.94 Patentblatt 94/01**

(84) Benannte Vertragsstaaten :
**CH DE ES FR GB LI**

(56) Entgegenhaltungen :
**DATABASE WPI, nr. 80-72653c, Derwent Publications Ltd., London, GB; && JP-A-55113271
(DAINI SEIKOSHA KK) 01-09-80
DATABASE WPI, nr. 80-72652c, Derwent Publications Ltd., London, GB; && JP-A-55113270
(DAINI SEIKOSHA KK) 02-09-80**

(73) Patentinhaber : **VARTA Batterie
Aktiengesellschaft
Postfach 5 40, Am Leineufer 51
D-30405 Hannover (DE)**

(72) Erfinder : **Fritz, Heinz P., Prof., Dr.
Königsberger Strasse 17
D-8046 Garching (DE)**
Erfinder : **Stein, Klaus
Sportplatzstrasse 66
D-8044 Unterschleissheim (DE)**

(74) Vertreter : **Kaiser, Dieter Ralf, Dipl.-Ing.
Gundelhardtstrasse 72
D-65779 Kelkheim (DE)**

**Beschreibung**

Die Erfindung betrifft einen Ionenleiter oder Elektrolyten für galvanische Elemente, der pulverförmige, chemische inerte Feststoffe enthält.

Das Anwendungsgebiet der Erfindung umfaßt vorzugsweise Li-Batterien mit festem oder zumindest immobilisiertem Elektrolyten.

Während man bei den klassischen Sekundärbatterien, etwa beim Bleiakkumulator oder bei den alkalischen Sammlern, oft dazu übergegangen ist, die wäßrigen Lösungen von Schwefelsäure bzw. Alkalilauge in ihrer freien Beweglichkeit aus Gründen der Betriebssicherheit einzuschränken, was man beim Blei-Säure-Elektrolyten beispielsweise durch Festlegen der erforderlichen Mindestmenge im Separator oder durch Gelifizierung erreicht, enthalten die energiereichen Zellen mit Alkalimetallanoden im allgemeinen flüssige Elektrolyte auf Lösungsmittel-Basis. Sehr häufig verwendete Elektrolytsalze sind Natrium- oder Lithiumsalze mit einwertigen Anionen wie $BF_4^-$, $AlCl_4^-$, $PF_6^-$, $AsF_6^-$, $ClO_4^-$ oder $CF_3SO_3^-$, welche in Lösungsmitteln wie Propylencarbonat, Acetonitril, Gamma-Butyrolacton oder Methyltetrahydrofuran gelöst sind.

Diese Elektrolyte weisen bei Raumtemperatur eine spezifische Leitfähigkeit Kappa zwischen $10^{-3}$ und $10^{-2}$ S/cm auf (siehe D. Linden, Herausg., "Handbook of Batteries & Fuel Cells", McGraw-Hill, 1984). Der Bau besonders betriebssicherer Feststoffbatterien verlangt jedoch feste, zumindest pastenförmige Elektrolytsysteme.

Die bislang als zukunftsreichste Vertreter der festen Ionenleiter entwickelten Poly-ether- Komplexe von Alkalisalzen des allgemeinen Bautyps Poly- [(ethylenoxid)n M$^+$X$^-$] [siehe z.B. R. Huq und G. C. Farrington, Solid State Ionics 28/30, 990 (1988)] erreichen jedoch bei RT nur Kappa -Werte um $10^{-5}$ S/cm, d.h. diese Werte liegen für den praktischen Einsatz um 2 bis 3 Zehnerpotenzen zu niedrig.

Auch vielfältige Modifikationen der polymeren Ionenleiter, die aus Veröffentlichungen der jüngsten Vergangenheit bekannt geworden sind, haben keine praktisch nutzbaren Leitfähigkeiten, verbunden mit thermischer oder chemischer Stabilität, erbracht [siehe z.B. J. L. Bennet et al., Chem. Materials 1, 14 (1989) oder D. Fish et al., Brit. Polym. J., 20, 281 (1988)].

Zum Beispiel hat man die Erfahrung gemacht, daß sich Polyethylenoxide thermisch oder in Gegenwart reaktiver Spezies zu Dioxan und anderen Produkten abbauen.

Anhand der Patentliteratur lassen sich weitere Versuche verfolgen, deren Ziel es war, für Feststoffbatterien als Elektrolyte bzw. Separatoren geeignete feste Ionenleiter verfügbar zu machen. So werden gemäß US-A 2 933 547 und US-A-2 861 116 für galvanische Festkörperelemente mit Zn-Anoden als Elektrolyte Ionenaustauschermembranen auf Phenolharzbasis eingesetzt, die Zn$^{2+}$-Ionen als mobile Phase enthalten. Nach US-A-3 186 876 und GB-A-999 948 fungiert z.B. bei einem Cu/Zn-Element ein reiner Na-Zeolith als ionenleitender Separator und neben diesem ein durch partiellen Austausch gegen Na$^+$-Ionen hergestellter Cu$^{2+}$-Zeolith als Katholyt.

Die EP-A-70 020 offenbart als Elektrolyt einen festen Protonenleiter, der vorzugsweise ebenfalls ein Zeolith ist und sein Protonenleitvermögen dem Einbau protonenhaltiger Kationen (z.B. $H_3O^+$, $NH_4^+$, $N_2H_5^+$) in die Kristallstruktur verdankt, in welcher H$^+$-Ionen selbst nicht mobil sind, da sie fest unter Bildung von Hydroxylgruppen an die Sauerstoffatome des Kieselsäuregerüsts gebunden werden. Dabei soll die zusätzliche Einführung einer "basischen Phase" ($NH_3$, $H_2O$, Alkohol, organisches Amin) in das Zeolith-Gitter den Ionentransport begünstigen. An diesem Material wurden für Batteriezwecke brauchbare Protonenleitfähigkeiten von mehr als $10^{-3}$ S/cm bei Raumtemperatur gefunden.

Der JA-A-55/113 270 ist ein Elektrolyt für galvanische Elemente mit Lithiumelektroden zu entnehmen, bei dem ein Salz mit der gleichen Metall-Komponente wie das Kathodenmetall über die Sättigung hinaus in ein organisches Lösungsmittel gegeben wird, um eine Elektrolytpaste zu erhalten. Diese Paste wird unter vermindertem Druck und bei erhöhter Temperatur (90°C) behandelt, um das Salz zu lösen. Zu dieser heißen, hochkonzentrierten Lösung wird vorzugsweise mehr als ein Vertreter aus der Gruppe $Al_2O_3$, $SiO_2$ und $TiO_2$ zugesetzt, um die Pastenbildung zu erleichtern. Als typisch für das Mengenverhältnis Salz/Verdickungshilfsmittel bzw. Feststoff läßt sich der JP-A-55/113270 ein Molverhältnis $NaPF_6$ : $Al_2O_3$ = 3:1 entnehmen, es werden spezifische Leitfähigkeiten des Elektrolyten von $10^{-4}$ bis $10^{-3}$ S/cm angegeben.

Der Erfindung liegt die Aufgabe zugrunde, einen Ionenleiter verfügbar zu machen, der an ein festes Material gebunden ist und dadurch eine Immobilisierung der Elektrolytflüssigkeit in galvanischen Elementen mit nichtwäßrigen Elektrolytsystemen erlaubt, wobei die Ionenleitfähigkeit dieses Festelektrolyten gegenüber bekannten Electrolyten verbessert sein soll.

Diese Aufgabe wird durch einen Ionenteiler mit den in Anspruch 1 genannten Merkmalen gelöst.

Der neue Ionenleiter zeichnet sich somit insbesondere aus durch ein Leitvermögen, welches mindestens von der Größenordnung $10^{-3}$ S/cm bei Raumtemperatur ist. Der erfindungsgemäße Elektrolyt behindert aufgrund seines hohen Feststoffanteils das Dendritenwachstum, sein Salzgehalt ist nicht so hoch, daß mit verstärkter Korrosion oder erhöhter Polarisationsneigung gerechnet werden müßte.

Pulverförmige, chemisch inerte Feststoffe, die außerdem nicht elektronenleitend sind, ergeben durch Mischen mit Lösungen von Metallsalzen in einem aprotischen Lösungsmittel je nach Menge der Flüssigkomponente feste oder pastöse Mischungsprodukte, welche überraschenderweise eine gleichhohe oder sogar eine etwas höhere Leitfähigkeit zeigen wie die ausgewählten aprotischen Elektrolytsysteme für sich allein bzw. in flüssiger Phase. Besonders vorteilhafte Feststoffe sind verschiedene anorganische Sauerstoffverbindungen, insbesondere in deren oberflächenreichen Formen, nämlich $SiO_2$, $Al_2O_3$, $TiO_2$, $MgO$, $B_2O_3$ oder Mischungen aus diesen, ferner Salze wie $Na_2SO_4$ und $AlPO_4$ oder homologe Verbindungen. Als sehr günstig, gerade im Hinblick auf die vorzugsweise Verwendung des neuen Ionenleiters in Lithiumbatterien, hat sich außerdem die Wahl eines Lithiumsalzes als Metallsalzkomponente erwiesen. Es wurde nämlich für diese Ionenspezies die Überführungszahl $t^+(Li^+)$ merklich größer als 0,5 ermittelt, was in diesem Falle dafür spricht, daß die $Li^+$-Ionen überwiegend die ladungstransportierende mobile Phase bilden. Andere bevorzugte Elektrolytsalze sind Na- Salze.

Der neue Ionenleiter weist jedoch auch in Verbindung mit anderen Metallsalzen, beispielsweise des Cu(I), Ag(I), Mg(II), Ca(II), Zn(II), Hg(II), Fe(II) und Al(III) gute oder befriedigende Leitfähigkeitswerte auf. Die negative Elektrode besteht dementsprechend vorzugsweise aus Lithium bzw. Lithiumlegierungen oder Lithium interkalierendem Kohlenstoffmaterial bzw. aus Alkali- oder Erdalkalimetallen.

Die Wahl des Anions, welches dem Matallsalz zugrundeliegt, ist dagegen unkritisch, denn es sind grundsätzlich alle Anionen geeignet, welche bislang für flüssige aprotische Elektrolytsysteme vorgeschlagen wurden. Dazu zählen namentlich $BF_4^-$, $AlCl_4^-$, $PF_6^-$, $ASF_6^-$, $ClO_4^-$, $CF_3SO_3^-$ sowie Halogenidionen. Die aprotischen Lösungsmittel, in denen die vorgenannten Salze erfindugnsgemäß gelöst werden, sind vorzugsweise offenkettige oder cyclische Ester (Methylformiat, Propylencarbonat, Gamma-Butyrolacton, Ethylacetat) und/oder offene bzw. cyclische Ether (Diethylether, Tetrahydrofuran, Methyletrahydrofuran, 1,3-Dioxolan, Dimethoxyethan) oder Acetonitril, Nitromethan, Dimethylsulfit, Ethylensulfit, Dimethylformanid, Dimethylsulfoxid, Sulfolan, N-Methylpyrrolidon oder Mischungen davon.

Die Konzentration des Salzes soll, wenn seine Löslichkeit dies bei dem jeweils ausgewählten Lösungsmittel überhaupt gestattet, zwischen 0,5 und 2-molar liegen.

Die reduzierbare Kathode kann aus einem Lithium interkalierenden Metallchalkogenid oder Mischungen aus solchen bestehen - besonders geeignet sind $MnO_x$, $CrO_x$, $V_2O_5$, $TiS_2$, $CuO$, $FeS_2$, $Bi_2O_3$, $CoSn_xO_y$- sowie aus leitfähigen Polymeren wie Polypyrrol oder Polyanilin.

Die Herstellung eines Ionenleiters gemäß der Erfindung durch Mischen des Feststoffes mit der Elektrolytlösung ist sehr einfach. Dabei können die Mengen der Mischungskomponenten je nach gewünschter Konsistenz des Fertigprodukts, von staubtrocken bis pastös, in beliebigen Proportionen gewählt werden. Auf 1g Feststoff kommen zwischen 1 und 10ml Elektrolytlösung. Einen genaueren Überblick geben die nachstehenden Ausführungsbeispiele. Bei diesen wurden die einem Leitfähigkeitstest unterworfenen Proben (siehe hierzu die tabellarische Aufstellung) stets wie folgt hergestellt.

Die jeweils angegebene Menge an inertem Feststoff bzw. Träger (A) wurde unter $N_2$ einige Stunden am Hochvakuum gehalten und dann unter $N_2$ gelagert, das Lösungsmittel und das Elektrolytsalz auf übliche Weise getrocknet und aus beiden die Elektrolytlösung (B) angesetzt. (A) und (B) wurden dann unter $N_2$ vermischt.

Zur Bestimmung der Leitfähigkeit Kappa wurden die Widerstände an 0,7mm dicken gepreßten oder als Paste in eine Ringform mit 13mm Durchmesser eingebrachten Proben mit Wechselstrom von 4kHz bei verschiedenen Temperaturen mehrmals je Probe vermessen oder der reine Elektrolytwiderstand durch Impedanzmessung bestimmt. Alle tabellierten Kappa-Werte haben die Dimension $10^{-3}$ S/cm.

Die Handelsnamen Aerosil 200 und Aerosil COK 84 in der Tabelle 1 stehen für reines $SiO_2$ bzw. $SiO_2$ + $Al_2O_3$ im Verhältnis 4:1. Bei allen Feststoff (A) handelt es sich um Produkte der Degussa (Deutsche Gold- und Silber-Scheideanstalt vormals Roessler, Frankfurt am Main).

Tabelle 1

1.  (A): 1,11 g Aerosil 200

    (B): 7,6 ml, 1M LiClO$_4$/AN. Paste

    Messungen nach 2 Wochen Lagern:

| T°C | 22 | 32 | 41 | 50 | 60 | 70 | 80 |
|---|---|---|---|---|---|---|---|
| $\varkappa$ | 9,46 | 10,6 | 11,9 | 13,0 | 14,0 | 14,8 | 16,0 |

2.  (A): 1,01 g Aerosil 200

    (B): 6 ml, 1M LiClO$_4$/AN, schüttfähiges Pulver

    Messung nach 2 Wochen Lagern:

| T°C | 22 | 32 | 42 | 52 | 61 | 70 | 80 |
|---|---|---|---|---|---|---|---|
| $\varkappa$ | 8,16 | 8,82 | 9,42 | 10,0 | 10,6 | 11,4 | 12,1 |

3.  (A): 0,45 g Aerosil 200

    (B): 2,7 ml, 1M LiClO$_4$/PC, schüttfähiges Pulver

    Messung nach 2 Wochen Lagern. $\varkappa$* gilt für reine 1M LiClO$_4$/PC-Lösung

| T°C | -30 | -15 | -5 | 10 | 20 | 40 | 60 | 80 | 100 |
|---|---|---|---|---|---|---|---|---|---|
| $\varkappa$ | 1 | 1,5 | 1,9 | 3,0 | 4,5 | 5,7 | 7,5 | 9,0 | 10,1 |
| $\varkappa$* | 1,2 | -- | 3,2 | -- | 4,9 | -- | -- | -- | -- |

4

4. (A): 0,32 g Aerosil 200

(B): 2 ml. 1M LiCF$_3$SO$_3$/ $\gamma$-Butyrolacton. Paste

| T°C | 20 | 32 | 40 | 50 | 60 | 70 | 80 |
|---|---|---|---|---|---|---|---|
| R[Ω][*] | 15,2 | 13,5 | 12,1 | 10,8 | 9,6 | 8,6 | 7,9 |
| $\varkappa$ | 2,47 | 2,79 | 3,11 | 3,49 | 3,92 | 4,38 | 4,77 |
| Z[Ω][**] | 13,2 | 11,4 | 10,3 | 8,95 | 8,12 | 7,41 | 6,81 |
| $\varkappa$ | 2,85 | 3,30 | 3,65 | 4,21 | 4,64 | 5,08 | 5,53 |

[*] mit der Brücke gemessene Summe aller Widerstände

[**] Impedanz (Widerstand des Elektrolyten allein)

5. (A): 0,7 g Aerosil COK 84 [SiO$_2$+Al$_2$O$_3$]

(B): 5 ml. 1M LiClO$_4$/Propylencarbonat. Paste

(R.T., nach 1 h) = 4,7; Messung nach 1 Woche Lagern:

| T°C | 22 | 32 | 41 | 50 | 60 | 70 | 80 | 90 | 100 |
|---|---|---|---|---|---|---|---|---|---|
| $\varkappa$ | 5,48 | 6,21 | 7,10 | 8,15 | 9,57 | 11,5 | 13,4 | 14,7 | 16,3 |

6. (A): 1,01 g Aerosil COK 84 [SiO$_2$+Al$_2$O$_3$]

(B): 6 ml. 1M LiClO$_4$/Acetonitril. Paste

Messung nach 2 Wochen Lagern:

| T°C | 22 | 32 | 40 | 50 | 60 | 70 | 80 |
|---|---|---|---|---|---|---|---|
| $\varkappa$ | 8,56 | 9,19 | 9,78 | 10,3 | 10,8 | 11,4 | 11,9 |

7.  (A): 0,25 g Aerosil COK 84

(B): 1,6 ml, 1M LiClO₄/ $\gamma$-Butyrolacton, Paste

| T°C | 25 | 32 | 40 | 50 | 60 | 70 | 80 |
|---|---|---|---|---|---|---|---|
| R[Ω]*⁾ | 7,8 | 6,3 | 5,6 | 5,1 | 4,4 | 3,9 | 3,4 |
| ϰ | 4,83 | 5,98 | 6,72 | 7,38 | 8,56 | 9,66 | 11,0 |
| Z[Ω]**⁾ | 4,30 | 3,91 | 3,52 | 3,13 | 2,72 | 2,48 | 2,13 |
| ϰ | 8,76 | 9,63 | 10,7 | 12,0 | 13,8 | 15,1 | 17,6 |

8.  (A): 0,20 g Aerosil COK 84

(B): 1,5 ml, 1M LiCF₃SO₃/ $\gamma$-Butyrolacton, Paste

Zum Vergleich wurden hier jeweils Impedanzmessungen gemacht.

| T°C | 22 | 30 | 40 | 50 | 60 | 70 | 80 |
|---|---|---|---|---|---|---|---|
| R[Ω]*⁾ | 19,0 | 17,0 | 15,2 | 13,6 | 12,2 | 10,9 | 9,8 |
| ϰ | 2,57 | 2,88 | 3,22 | 3,60 | 4,00 | 4,49 | 4,99 |
| Z[Ω]**⁾ | 12,5 | 10,9 | 9,6 | 8,6 | 7,79 | 7,12 | 6,40 |
| ϰ | 3,91 | 4,49 | 5,10 | 5,69 | 6,28 | 6,87 | 7,65 |

9.  (A): 1,01 g Aluminiumoxid C

(B): 6 ml, 1M LiClO₄/AN, Paste

Messung nach 2 Wochen Lagern:

| T°C | 22 | 32 | 40 | 50 | 60 | 70 | 80 |
|---|---|---|---|---|---|---|---|
| ϰ | 8,29 | 9,01 | 9,85 | 10,9 | 12,2 | 13,3 | 14,5 |

6

10. (A): 0,83 g Titanoxid P 25

(B): 3 ml, 1M LiClO₄/PC, Paste

Messung nach 1 Woche Lagern:

| T°C | 25 | 35 | 40 | 50 | 60 | 70 | 80 |
|---|---|---|---|---|---|---|---|
| $\varkappa$ | 3,94 | 4,87 | 5,18 | 6,23 | 7,53 | 8,81 | 10,1 |


11. (A): 3,14 g Na₂SO₄

(B): 0,72 ml, 1M LiCF₃SO₃/PC, Paste

| T°C | 20 | 30 | 40 | 50 | 60 | 70 | 80 |
|---|---|---|---|---|---|---|---|
| $\varkappa$ | 0,24 | 0,29 | 0,35 | 0,42 | 0,51 | 0,61 | 0,68 |

Es wurde gefunden, daß die Proben eine gewisse Zeit, nämlich 1 bis 2 Wochen, benötigen, um konstante κ-Werte zu erreichen. Vermutlich werden dann definierte Grenzschichten oder eine "gleichmäßige Umhüllung" ausgebildet.

Zwischen schüttfähigen und pastenartigen Produkten, d. h. in Abhängigkeit von der Konsistenz ergeben sich nur geringe Unterschiede im Leitverhalten. Entscheidend für gute Leitfähigkeit ist die Adsorptionsfähigkeit des Feststoffes bis zur Einhüllung aller Partikel. Ein Überschuß an "frei beweglichem" Elektrolyt kann toleriert werden, ist aber nicht erforderlich.

Ein Ionenleiter gemäß der Erfindung ist auch gegenüber wiederholtem Aufheizen beständig.

Nähere Auskünfte über die Qualität einiger für die Herstellung eines erfindungsgemäßen Ionenleiters besonders günstiger Feststoffe (TiO$_2$, SiO$_2$, Al$_2$O$_3$) geben die Kenndaten in der nachstehenden Tabelle 2. Es handelt sich um die gleichen Handelsprodukte wie bei den in Tabelle 1 aufgeführten Proben, die alle pyrogen erzeugt sind. Erhöhung der spezifischen Oberfläche der Trägermaterialien erbringt eine Steigerung von κ.

7

Tabelle 2

| | TiO₂ P25 | Aerosil 200 | Aerosil COK 84 | Al₂O₃ C |
|---|---|---|---|---|
| Oberfläche [m²/g] | 50±15 | 200±25 | 170±30 | 100±15 |
| pH (susp. in H₂O) | 3-4 | 3,6-4,3 | 3,6-4,3 | 4-5 |
| Partikel- größe [nm] | 30 | 12 | - | 20 |

Die Untersuchungsergebnisse können so dahingehend zusammengefaßt werden, daß ein neuer Ionenleiter gefunden wurde, der bei fester bis halbfester Konsistenz eine Leitfähigkeit $\kappa$ in der Größenordnung von > $10^{-3}$ S/cm bei RT, bei höheren Temperaturen bis 100°C sogar von >$10^{-2}$ S/cm erreicht, und damit erstmals die Herstellung von primären und sekundären Feststoffbatterien mit brauchbaren Leistungsdaten ermöglicht, welche diese Batterien bislang nur bei Verwendung von flüssigen organischen Elektrolyten besaßen. Dank einem chemisch inerten, anorganischen Feststoff, der als Träger und Adsorbens für einen Elektrolyten auf der Basis eines aprotischen Lösungsmittels dient, verhält sich der Ionenleiter temperaturstabil und ist in einem Temperaturbereich, der sich von -50°C bis nahe an den Siedepunkt des reinen Lösungsmittels erstreckt, einsetzbar.

Erfindungsgemäße mehr oder weniger pastöse Elektrolyten haben gegenüber flüssigen Elektrolyten eine Reihe von Vorteilen: Sie sind leicht herzustellen und zu verarbeiten; (volumetrisch dosierbar); haften gut auf Anode und Kathode; eignen sich besonders für die Miniaturisierung von Zellen, da sie in dünnen Schichten ohne zusätzliche Separation verwendet werden können; sie haben eine gewisse mechanische Festigkeit, die das Dendritenwachstum behindert, erlauben trotzdem den Ausgleich von Volumenschüben ohne Kontaktverlust an Anode und Kathode im Gegensatz zu harten Festkörperionenleitern (Li₃N, Li₄SiO₄); sie haben keine Tendenz, Dichtungen zu unterkriechen, was die Zellabdichtung erleichtert; das Gel bindet flüchtige Lösungsmittel und verhindert ein Austrocknen der Zelle.

Die Vorteile der Verwendung erfindungsgemäßer Elektrolyte sowohl bei Primär- als auch bei Sekundärelementen zeigten Versuche, die mit Knopfzellen durchgeführt wurden. Dabei dienten Zellen des Typs Li/CuO, Li/FeS₂ und Li/MnO₂ als Beispiele für ein Primärsystem, eine Li/Polypyrrol-Zelle als Beispiel für ein Sekundärsystem. Der zu diesem Zweck eingesetzte Elektrolyt war aus 2,2 g Aerosil 200 und 15 ml 1 M LiClO₄/PC hergestellt worden. Vergleichszellen enthielten den konventionellen LiClO₄/PC-Flüssigelektrolyten.

Bei den getesteten Primärelementen wirkt sich der erfindungsgemäße Elektrolyt in einer deutlich verbesserten Kapazitätsausbeute der Kathodenmaterialien aus, wie die nachstehenden Vergleichszahlen zeigen. Sie beziehen sich auf einen 1stündigen Strom.

| Kathoden-Material | Zelle mit erfindungsgemäßem Elektrolyt Ah/kg | Zelle mit flüssigem Elektrolyt Ah/kg |
|---|---|---|
| CuO | 215 | 184 |
| FeS₂ | 276 | 122 |
| MnO₂ | 216 | 194 |

Während der Entladung zeigten die genannten Primärzellen durchweg um mindestens 100 mV höhere Spannungslagen als Vergleichszellen mit einem Feststoff-freien Flüssigelektrolyten.

Im Hinblick auf die Verwendung des neuen Elektrolyten in Li-Sekundärzellen ist die sehr geringe Polarisationsneigung der Li-Elektrode, wie sich im Dauerzyklentest bei einer Li/Li-Zelle gezeigt hat, eine günstige Voraussetzung. Damit steht im Einklang, daß eine Li/Polypyrrolzelle gemäß der Erfindung mit einer um ca. 20% höheren Stromausbeute zyklisiert werden konnte als die Vergleichszelle mit dem konventionellen LiClO$_4$/PC-Elektrolyten.

## Patentansprüche

1. Ionenleiter oder Elektrolyt für galvanische Elemente, der pulverförmige, chemisch inerte Feststoffe enthält, dadurch gekennzeichnet, daß er aus einer pulver- oder pastenförmigen Mischung der pulverförmigen, inerten und elektronisch nichtleitenden Feststoffe mit aprotischen Lösungsmitteln, die Metallsalze enthalten, besteht und nicht protonenleitend ist, wobei auf jeweils 1 g Feststoff in der Mischung 1 bis 10 ml Metallsalzlösung entfallen, deren Konzentration an Metallsalz 0,5- bis 2-molar ist, daß der Feststoff ein so hohe Adsorptionsfähigkeit aufweist, daß die frei bewegliche Elektrolytphase vollständig aufgenommen werden kann, wobei aber ein Überschuß an frei beweglichem Elektrolyt toleriert werden kann, und daß sein Leitvermögen mindestens von der Größenordnung $10^{-3}$ S/cm bei Raumtemperatur ist.

2. Ionenleiter nach Anspruch 1, dadurch gekennzeichnet, daß die Metallsalze Li-Salze sind.

3. Ionenleiter nach Anspruch 1, dadurch gekennzeichnet, daß die Metallsalze Na-Salze sind.

4. Ionenleiter nach einem der Ansprüche 1 bis 3, dadurch gekennzeichnet, daß die Anionen der Metallsalze aus der Gruppe $BF_4^-$, $AlCl_4^-$, $PF_6^-$, $AsF_6^-$, $ClO_4^-$, $CF_3SO_3^-$, $F^-$, $Cl^-$, $Br^-$, $I^-$ ausgewählt sind.

5. Ionenleiter nach einem der Ansprüche 1 bis 4, dadurch gekennzeichnet, daß das aprotische Lösungsmittel Propylencarbonat, Acetonitril, Gamma-Butyrolacton, Nitromethan, Tetrahydrofuran, Methyltetrahydrofuran, Dimethoxyethan, Dioxolan oder eine Mischung aus diesen ist.

6. Ionenleiter nach einem der Ansprüche 1 bis 5, dadurch gekennzeichnet, daß die inerten und elektronisch nicht leitenden Feststoffe aus anorganischen Sauerstoffverbindungen aus der Gruppe $SiO_2$, $Al_2O_3$, $TiO_2$, MgO, $B_2O_3$, $Na_2SO_4$, $AlPO_4$ und deren Homologen oder Mischungen aus diesen, vorzugsweise aus oberflächenreichen Formen der Verbindungen, bestehen.

7. Ionenleiter nach einem der Ansprüche 1 bis 6, dadurch gekennzeichnet, daß seine Konsistenz zwischen fest und pastenförmig durch das Verhältnis von Elektrolytsalzlösung zu Feststoffpulver in der Mischung einstellbar ist.

8. Ionenleiter nach einem der Ansprüche 1 bis 7, dadurch gekennzeichnet, daß er in den Temperaturgrenzen von -50°C bis nahe dem Siedepunkt des seinem Elektrolytlösungs-Bestandteil zugrundeliegenden reinen Lösungsmittels verwendbar ist.

9. Galvanisches Element mit einem Ionenleiter nach einem der Ansprüche 1 bis 8 als Elektrolyt, mit einer negativen, im wesentlichen aus einem Alkali- oder Erdalkalimetall bestehenden Elektrode und einer ein Übergangsmetallchalkogenid oder ein leitfähiges Polymer enthaltenden positiven Elektrode.

## Claims

1. Ionic conductor or electrolyte for galvanic cells which contains chemically inert solids in the form of powder, characterised in that it comprises a mixture in powder or paste form of the inert and electronically non-conductive solids in powder form with aprotic solvents which contain metal salts, and is non-proton conductive, in a proportion of respectively 1 g solid in the mixture to 1 to 10 ml of metal salt solution whereof the metal salt concentration is 0.5 to 2 molar, in that the solid exhibits an adsorption capacity sufficient to take up completely the freely movable electrolyte phase, with, however, it being possible for an excess of freely movable electrolyte to be tolerated, and in that the conductivity thereof is at least of the order of $10^{-3}$ S/cm at room temperature.

2. Ionic conductor according to Claim 1, characterised in that the metal salts are Li salts.

3. Ionic conductor according to Claim 1, characterised in that the metal salts are Na salts.

4. Ionic conductor according to one of Claims 1 to 3, characterised in that the anions of the metal salts are selected from the group comprising $BF_4^-$, $AlCl_4^-$, $PF_6^-$, $AsF_6^-$, $ClO_4^-$, $CF_3SO_3^-$, $F^-$, $Cl^-$, $Br^-$, $I^-$.

5. Ionic conductor according to one of Claims 1 to 4, characterised in that the aprotic solvent is propylene carbonate, acetonitrile, gamma-butyrolactone, nitromethane, tetrahydrofuran, methyltetrahydrofuran, dimethoxyethane, dioxolane or a mixture thereof.

6. Ionic conductor according to one of Claims 1 to 5, characterised in that the inert and electronically non-conductive solids comprise inorganic oxygen compounds taken from the group comprising $SiO_2$, $Al_2O_3$, $TiO_2$, $MgO$, $B_2O_3$, $Na_2SO_4$, $AlPO_4$ and homologues or mixtures thereof, preferably of forms of the compounds having a high surface area.

7. Ionic conductor according to one of Claims 1 to 6, characterised in that the consistency thereof is adjustable between solid and paste-form by means of the ratio of electrolyte salt solution to solid powder in the mixture.

8. Ionic conductor according to one of Claims 1 to 7, characterised in that it is usable within temperature limits of from -50 °C to close to the boiling point of the pure solvent on which the electrolyte solution component thereof is based.

9. Galvanic cell having as electrolyte an ionic conductor according to one of Claims 1 to 8, having a negative electrode substantially of an alkali metal or alkaline earth metal and having a positive electrode containing a transition metal chalcogenide, or a conductive polymer.

## Revendications

1. Conducteur ionique ou électrolyte pour éléments galvaniques qui renferme des solides inertes chimiquement pulvérulents, caractérisé en ce qu'il est formé d'un mélange pulvérulent ou pâteux des solides pulvérulents, inertes et non conducteurs électroniquement avec des solvants aprotiques qui contiennent des sels métalliques et qui n'est pas conducteur de protons, dans lequel pour respectivement 1 g de solide dans le mélange, 1 à 10 ml de solution de sel métallique revient dont la concentration en sel métallique est 0,5 à 2 molaires, en ce que le solide manifeste une capacité d'adsorption aussi élevée que la phase d'électrolyte d'activité libre peut être absorbée complètement dans laquelle cependant un excès en électrolyte à activité libre peut être toléré, et en ce que sa conductivité est d'au moins de l'ordre de grandeur de $10^{-3}$ S/cm à température ambiante.

2. Conducteur ionique selon la revendication 1, caractérisé en ce que les sels métalliques sont des sels de lithium.

3. Conducteur ionique selon la revendication 1, caractérisé en ce que les sels métalliques sont des sels de sodium.

4. Conducteur ionique selon l'une des revendications 1 à 3, caractérisé en ce que les anions des sels métalliques sont choisis dans le groupe formé de $BF_4^-$, $AlCl_4^-$, $PF_6^-$, $AsF_6^-$, $ClO_4^-$, $CF_3SO_3^-$, $F^-$, $Cl^-$, $Br^-$, et $I^-$.

5. Conducteur ionique selon l'une des revendications 1 à 4, caractérisé en ce que le solvant aprotique est la carbonate de propylène, l'acétonitrile, la γ-butyrolactone, le nitrométhane, le tétrahydrofuranne, le méthyltétrahydrofuranne, le diméthoxyéthane, le dioxolane, ou un mélange à base de ceux-ci.

6. Conducteur ionique selon l'une des revendications 1 à 5, caractérisé en ce que les matières solides non conductrices électroniquement sont formés parmi les composés oxygénés minéraux choisis dans le groupe de $SiO_2$, $Al_2O_3$, $TiO_2$, $MgO$, $B_2O_3$, $Na_2SO_4$, $AlPO_4$ et de leurs homologues ou des mélanges à base de ceux-ci, de préférence à partir de formes riches en surface des composés.

7. Conducteur ionique selon l'une des revendications 1 à 6, caractérisé en ce que sa consistance est réglable entre solide et pâteux grâce au rapport de la solution de sel électrolyte à la poudre de solide dans le mélange.

8. Conducteur ionique selon l'une des revendications 1 à 7, caractérisé en ce qu'il est utilisable dans des limites de températures allant de -50°C jusqu'au voisinage du point d'ébullition de son constituant de la solution d'électrolyte du solvant pur qui sert de base.

9. Elément galvanique ayant un conducteur ionique selon l'une des revendications 1 à 8 comme électrolyte, avec une électrode négative constituée pour l'essentiel par un métal alcalin ou alcalino-terreux et une électrode positive contenant un chalcogénure de métal de transition ou un polymère conducteur.